# EUROPÄISCHE PATENTSCHRIFT

(11) **EP 3 268 823 B1**
(45) Veröffentlichungstag und Bekanntmachung des Hinweises auf die Patenterteilung: **20.11.2019**
(21) Anmeldenummer: 16716542.2
(22) Anmeldetag: 13.04.2016
(51) Int. Cl.: G05B 19/042, A47B 9/00, H02B 1/24

(54) **VORRICHTUNG UND VERFAHREN ZUM STEUERN VON MEHREREN HÖHENVERSTELLBAREN TISCHEN**
DEVICE AND METHOD FOR CONTROLLING HEIGHT-ADJUSTABLE TABLES
DISPOSITIF ET PROCÉDÉ DE COMMANDE DE TABLES RÉGLABLES EN HAUTEUR

(30) Priorität: 21.04.2015 DE 102015207257
(43) Veröffentlichungstag der Anmeldung: 17.01.2018
(73) Patentinhaber: Kesseböhmer Produktions GmbH & Co. KG, 73235 Weilheim/Teck (DE)
(72) Erfinder: HANSEN, Melf, 75053 Gondelsheim (DE)
(74) Vertreter: Prüfer & Partner mbB Patentanwälte · Rechtsanwälte
(86) Internationale Anmeldenummer: PCT/EP2016/058106
(87) Internationale Veröffentlichungsnummer: WO 2016/169824

(56) Entgegenhaltungen:
- DE-A1-102004 050 212
- DE-U1- 20 002 886
- US-A- 5 259 326

## Beschreibung

Die Erfindung betrifft eine Vorrichtung, welche zum Steuern von höhenverstellbaren Tischen vorgesehen ist.

Höhenverstellbare Möbel, wie beispielsweise Tische, weisen mehrere Komponenten auf. Dazu gehört eine Stromversorgung, ein Steuergerät, ein Eingabegerät sowie wenigstens ein Elektromotor, welcher in wenigstens einer Tischsäule verbaut ist.

Wenn mehrere höhenverstellbare Tische als Einheit betrieben werden, dann ist es im Stand der Technik bekannt, mittels nur einer Stromversorgung alle höhenverstellbare Tische bzw. deren Steuergeräte mit Strom zu versorgen. Jeder dieser Tische weist ein Steuergerät auf, welches die im Tisch verbauten Motoren steuert. Des Weiteren ist es bekannt, für jeden Elektromotor ein separates Steuergerät vorzusehen. Im Stand der Technik weist ein Verbund von mehreren höhenverstellbaren Tischen demnach eine Vielzahl von Steuergeräten auf. Unter den einzelnen Komponenten eines höhenverstellbaren Tisches zählt das Steuergerät zu den teuren Komponenten, folglich ist der Kostenanteil bei einem Verbund von mehreren höhenverstellbaren Tischen für die Steuergeräte relativ hoch.

Aus dem Stand der Technik ist das Dokument DE 10 2004 050 212 A1 bekannt, das einen multifunktionalen Tisch offenbart, umfassend eine segmentartig unterteilte Arbeitsplatte auf einem die Arbeitsplatte tragenden Basisgestell.

Des Weiteren ist das Dokument DE 200 02 886 U1 bekannt, das eine aus mehreren Arbeitstischen bestehende Einheit offenbart.

Darüber hinaus ist das Dokument US 5,259,326 bekannt, das einen automatisch höhenverstellbaren Arbeitsplatz offenbart.

Es ist Aufgabe der vorliegenden Erfindung, eine Vorrichtung zum Steuern von höhenverstellbaren Tischen anzubieten, mit welcher ein Verbund von mehreren höhenverstellbaren Tischen kostengünstiger bewerkstelligt werden kann. Die Aufgabe wird mittels einer Vorrichtung gelöst, welche die Merkmale des Anspruchs 1 aufweist, sowie mittels eines Systems gemäß Anspruch 5 und mittels eines Verfahrens gemäß Anspruch 10. Der Begriff des höhenverstellbaren Tisches ist nicht als Einschränkung zu verstehen, selbstverständlich sind damit alle denkbare Arten und Formen von verstellbaren Möbeln gemeint.

Vorteilhafte Weiterbildungen sind Gegenstand der Unteransprüche.

Mittels der Vorrichtung ist es möglich, mehrere höhenverstellbare Tische mit nur einem Steuergerät zu steuern. Dabei funktioniert die Vorrichtung als Verteiler (HUB) bzw. Moderator bzw. Vermittler zwischen den einzelnen Tischen und dem Steuergerät. Sobald ein Bedienelement an einem der Tische betätigt wird, wird die Benutzereingabe durch die Vorrichtung erkannt. Daraufhin teilt die Vorrichtung dem Steuergerät mit, welche Benutzereingabe von welchem Eingabeelement bzw. von welchem Tisch erkannt wurde. Aus der Information heraus, von welchem Eingabeelement die Benutzereingabe stammt, ermittelt das Steuergerät, welche und wie viele Motoren gesteuert werden sollen, sowie deren Steuerparameter. Diese Steuerparameter enthalten beispielsweise den Typ des bzw. der im zu steuernden Tisch verbaute(n) Motors bzw. der Motoren, so dass das Steuergerät darauffolgend den erforderlichen Fahrstrom ermitteln kann. Die Steuerparameter enthalten des Weiteren die aktuelle Position des höhenverstellbaren Tisches bezüglich seines Verfahrwegs. Der daraufhin von dem Steuergerät abgegebene Steuerbefehl, bzw. der für den oder die Motoren bestimmte Fahrstrom, wird mittels der Vorrichtung an den zu steuernden Tisch bzw. dessen Motor(en) weitergeleitet. Während dieser Zeit blockiert die Vorrichtung die restlichen an die Vorrichtung angeschlossenen Tische, denn das Steuergerät kann nur jeweils einen Tisch zur gleichen Zeit steuern. Das bedeutet, dass Benutzereingaben an allen Tischen ignoriert werden, außer an dem gerade im Betrieb befindlichen Tisch. Demnach ist es mittels der Vorrichtung nicht möglich, mehrere Tische gleichzeitig zu steuern bzw. zu verfahren. Sobald die Benutzereingabe und somit das Verstellen eines höhenverstellbaren Tisches abgeschlossen ist, wartet die Vorrichtung auf neue Benutzereingaben. Diese können nun wieder von einem beliebigen Tisch stammen und werden von der Vorrichtung angenommen. Aufgrund dieser Anordnung ist es möglich, eine Vielzahl von höhenverstellbaren Tischen oder höhenverstellbaren Möbeln zu steuern, wobei nur ein einziges Steuergerät benötigt wird. Dadurch kann eine Anordnung von mehreren höhenverstellbaren Tischen besonders kostengünstig errichtet und betrieben werden.

Wenn eine Benutzereingabe an einem Bedienelement mittels der Vorrichtung erkannt wurde, teilt die Vorrichtung dem Steuergerät vorzugsweise mit, von welchem Bedienelement der weitergeleitete Steuerbefehl stammt. Denn nur so kann das Steuergerät wissen, welcher der höhenverstellbaren Tische bewegt werden soll. Dabei ist es für das Steuergerät vor dem Abgeben eines Fahrstroms besonders relevant, in welcher Position bzw. welcher Ausfahrhöhe sich der zu steuernde Tisch aktuell befindet. Außerdem benötigt das Steuergerät zum Ermitteln des Fahrstroms die Motorparameter des zu steuernden Motors bzw. der zu steuernden Motoren. Vorzugsweise weist das Steuergerät einen Prozessor zur Datenverarbeitung auf. Vorzugsweise weist das Steuergerät einen Speicher auf, in welchem die Parameter und die aktuelle Position der an die Vorrichtung angeschlossenen Motoren gespeichert sind.

Wenn das Steuergerät nach einer eingegangenen Benutzereingabe ein Steuersignal bzw. einen Fahrstrom ausgibt, leitet die Vorrichtung dieses Steuersignal bzw. den Fahrstrom vorzugsweise an den oder die zu steuernden Motoren weiter, sodass ausschließlich der bzw. die richtigen Motor(en) bewegt werden. Deshalb muss die Vorrichtung die Entscheidung treffen, an welchen Tisch (bzw. welche(n) Motor(en)) ein Signal bzw. ein Fahrstrom weitergeschaltet wird.

Die Vorrichtung weist vorzugsweise einzelne Einheiten auf, unter welchen die Motoren und Bedienelemente zusammengefasst sind. Dabei besteht jede Einheit aus wenigstens einem Motor und einem Bedienelement. Jede einzelne Einheit ist vorzugsweise genau einem Tisch zugeordnet. Wenn nun ein Eingabebefehl von einer dieser Einheiten mittels der Vorrichtung an das Steuergerät weitergeleitet wird, wird der von dem Steuergerät abgegebene Steuerbefehl (bzw. Fahrstrom) wieder an die gleiche Einheit zurückgegeben bzw. durchgeschaltet. Durch das Einteilen der Motoren und jeweils eines Steuergeräts in verschiedene Einheiten kann das Steuern der höhenverstellbaren Tische vereinfacht werden. Falls beispielsweise ein Tisch mehrere Motoren, wie drei oder vier Motoren aufweist, werden alle diese Motoren aufgrund eines Steuerbefehls (bzw. Fahrstroms) bewegt, sobald eine Benutzereingabe aus der gleichen Einheit mittels der Vorrichtung an das Steuergerät weitergeleitet wird. Vorzugsweise weist jede der Einheiten wenigstens einen Sensor auf, mittels welchem beispielsweise eine Kollision eines höhenverstellbaren Tisches mit einem Gegenstand erfasst wird, wodurch ein Verstellen dieses Tisches gestoppt wird. Vorzugsweise wird ein solches Sensorsignal mittels der Vorrichtung an das Steuergerät weitergeleitet, so dass dieses das Signal beim Steuern berücksichtigen kann. Als Sensoren können beispielsweise FSR-Sensoren oder Hall-Signalgeber vorgesehen sein.

Vorzugsweise weist die Vorrichtung ein Kommunikations-BUS-System auf. Über ein solches Kommunikations-BUS-System wird vorzugsweise die Kommunikation zwischen Vorrichtung und Steuergerät abgewickelt.

Vorzugsweise weist das Steuergerät eine externe Stromversorgung auf, durch welche alle Motoren, welche durch das Steuergerät gesteuert werden sollen, mit Strom versorgt werden. Vorzugsweise werden alle weiteren an das Steuergerät (auch indirekt über die Vorrichtung) angeschlossenen Komponenten, welche Strom benötigen, ebenfalls durch die externe Stromversorgung des Steuergeräts mit Strom versorgt. Dadurch ist nur eine einzige Stromversorgung für alle an das Steuergerät angeschlossenen Komponenten nötig. Vorzugsweise weist das Steuergerät und die Vorrichtung jeweils ein Gehäuse auf, wobei die beiden Gehäuse miteinander verbunden werden können. Dadurch wird die Handhabung von Steuergerät und Vorrichtung besonders vereinfacht, da beide als eine Einheit in beispielsweise einem Kabelkanal untergebracht werden können. Dadurch wird insbesondere die Montage eines höhenverstellbaren Tisches bzw. von mehreren höhenverstellbaren Tischen vereinfacht, wodurch Kosten eingespart werden.

Vorzugsweise wird die Verbindung zwischen Vorrichtung und Steuergerät über ein Zentralkabel vorgenommen.

Vorzugsweise wird die Kommunikation zwischen den in den Tischsäulen verbauten Sensoren und der Vorrichtung sowie mit dem Steuergerät über ein Kommunikations-BUS-System vorgenommen. Vorzugsweise wird die Kommunikation zwischen allen Bauteilen, welche mit Steuergerät und/oder Vorrichtung kommunizieren, über ein Kommunikations-BUS-System vorgenommen.

Vorzugsweise ist die Vorrichtung dazu eingerichtet, eine eingegangene Benutzereingabe inkl. der Information ihrer Herkunft an das Steuergerät weiterzuleiten, und daraufhin eine Verbindung zwischen Steuergerät und den anzusteuernden Motoren herzustellen. Vorzugsweise wird diese Verbindung mindestens während eines Steuervorgangs aufrechterhalten, sowie eine darüber hinaus festgelegte Wartezeit. Durch diese Wartezeit wird die Reaktionszeit bei mehrmalig aufeinanderfolgenden Benutzereingaben in kurzen Zeitabständen am gleichen Eingabegerät vermindert.

In einer weiteren bevorzugten Ausführungsform entscheidet die Vorrichtung nach einer festgelegten Prioritätsreihenfolge, welcher Tisch bzw. welche Motoren bei mehreren gleichzeitigen Benutzereingaben mit dem Steuergerät verbunden werden. Dadurch ist es möglich, einen bestimmten "wichtigen" Tisch jederzeit verstellen zu können, und "weniger wichtige" Tische dabei zu blockieren.

In einer weiteren bevorzugten Ausführungsform weist das System einen "Einlernmodus" auf. Sobald dieser aktiviert wird, werden nacheinander alle an die Vorrichtung angeschlossenen Tische in ihre Extremlagen verfahren. Dadurch "lernt" das Steuergerät den maximal möglichen Verfahrweg jedes einzelnen Tisches sowie die aktuelle Position jedes Tisches bezüglich des Verfahrwegs. Vorzugsweise werden während des Einlernens auch Motorparameter zwischen den Motoren und dem Steuergerät sowie Parameter der Einklemmschutzsensoren o.Ä. ausgetauscht.

Unter Bezugnahme auf die nachfolgend beigefügten Zeichnungen wird ein bevorzugtes Ausführungsbeispiel der Erfindung erläutert.

Es wird gezeigt:
- Fig. 1:: ein schematischer Schaltplan eines Ausführungsbeispiels der Erfindung mit drei Tischen.
- Fig. 2:: ein schematischer Schaltplan eines Ausführungsbeispiels mit n Tischen und jeweils einem Bedienelement pro Tisch, sowie eine detaillierte Darstellung des Schaltplans der Vorrichtung (n ist eine ganzzahlige Variable, wobei diese Definition für die gesamte Patentschrift gilt).

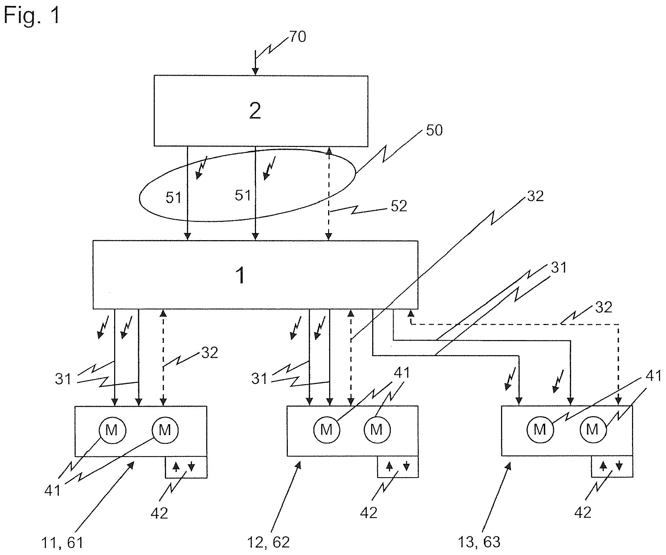

Fig. 1 zeigt einen schematischen Schaltplan eines Ausführungsbeispiels der Vorrichtung 1 zum Steuern von höhenverstellbaren Tischen 61, 62, 63. Im oberen Bereich der Darstellung ist das Steuergerät 2 gezeigt, welches über eine externe Stromversorgung 70 verfügt. Zwischen Vorrichtung 1 und Steuergerät 2 ist eine Schnittstelle 50 vorgesehen, wobei die Schnittstelle 50 in der gezeigten Ausführungsform wiederum drei Schnittstellen 51, 51, 52 aufweist, wobei die Schnittstellen 51,51 mit einem schematischen Blitz gekennzeichnet ist, der die Abgabe von Strom zum Versorgen von in Motorsäulen verbauten Motoren 41 darstellt. Mittels der Schnittstelle 52 werden Benutzereingaben, die an einem der Bedienelemente 42 getätigt werden, mittels der Vorrichtung 1 an das Steuergerät 2 weitergeleitet. Durch die Schnittstelle 52 werden des Weiteren Sensorsignale an das Steuergerät 2 weitergeleitet, von Sensoren, die in jeweils einem der Tische 61, 62, 63 bzw. einer der Einheiten 11, 12, 13 vorgesehen sind. In der gezeigten Ausführungsform sind an der Vorrichtung 1 drei höhenverstellbare Tische 61, 62, 63 angeschlossen. Der Tisch 61 weist eine Einheit 11 auf, der Tisch 62 weist eine Einheit 12 auf und der Tisch 63 weist eine Einheit 13 auf. Jede dieser Einheiten 11, 12, 13 weist des Weiteren jeweils zwei Motoren 41 und ein Bedienelement 42 auf. Des Weiteren ist in Fig. 1 zu erkennen, dass zwischen jeder der Einheiten 11, 12, 13 und der Vorrichtung 1 zwei Schnittstellen 31 sowie eine Schnittstelle 32 vorgesehen ist. Die Schnittstelle 32 übermittelt Eingabebefehle von dem Bedienelement 42 sowie Sensorsignale an die Vorrichtung 1, wobei diese durch die Vorrichtung 1 an das Steuergerät 2 weitergeleitet werden. Das daraufhin von dem Steuergerät 2 abgegebene Steuersignal (bzw. der Fahrstrom) wird von der Vorrichtung 1 an die jeweilige Einheit 11, 12, 13 geleitet, unter Verwendung der Schnittstellen 31.

In einer nicht gezeigten Ausführungsform weist wenigstens einer der Tische 61, 62, 63 mehrere Einheiten 11, 12, 13 auf. In dieser Ausführungsform besitzt wenigstens einer der Tische 61, 62, 63 mehrere unabhängig voneinander verstellbare Elemente, wie beispielsweise zwei unabhängig voneinander höhenverstellbare Tischplatten. Dabei ist für jede der höhenverstellbaren Tischplatten eine separate Einheit 11, 12, 13 vorhanden.

In einer weiteren nicht gezeigten Ausführungsform ist eine beliebige Anzahl von verstellbaren Möbeln mit jeweils einer beliebigen Anzahl von Einheiten 11, 12, 13 für jeweils ein verstellbares Element vorgesehen.

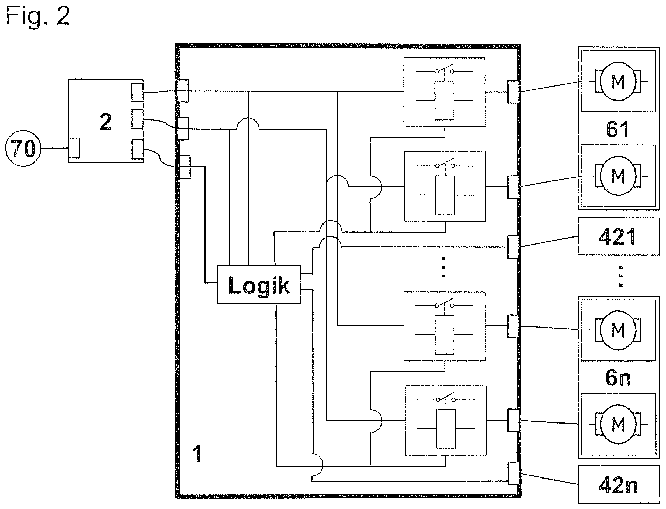

Fig. 2 zeigt ein Ausführungsbeispiel der Vorrichtung 1, welche mit einem Steuergerät 2 verbunden ist, wobei das Steuergerät 2 über eine externe Stromversorgung 70 verfügt. Des Weiteren ist die Vorrichtung 1 mit einer variable Anzahl von n Tischen 61, 6n (Bildungsgesetz: n+1) und einer variablen Anzahl von n Bedienelementen 421, 42n (Bildungsgesetz: n+1) verbunden, wobei das Bedienelement 421 zum Bedienen des Tisches 61 vorgesehen ist, und jedes Bedienelement 42n zum Bedienen des Tisches 6n vorgesehen ist. Des Weiteren weist die Vorrichtung 2n Relais zum Weiterleiten des Fahrstroms und eine Logik zum Steuern der internen Abläufe innerhalb der Vorrichtung 1 auf. Jeder der Tische 61, 6n weist jeweils zwei Motorsäulen M auf. Des Weiteren weist die Vorrichtung 1 eine Logik-Schaltung (Logik) zum Steuern der internen Abläufe innerhalb der Vorrichtung 1 auf.

In einem weiteren Ausführungsbeispiel (nicht dargestellt) weist die Vorrichtung 1 keine Relais auf, sondern Halbleiterbaugruppen.

In einem weiteren Ausführungsbeispiel (nicht dargestellt) weist die Vorrichtung 1 Relais und Halbleiterbaugruppen auf.

In einem weiteren Ausführungsbeispiel (nicht dargestellt) handelt es sich um eine Abwandlung des in Figur 2 gezeigten Ausführungsbeispiels, wobei n=2 gilt. Dabei sind demnach zwei Tische 61, 62 an die Vorrichtung 1 angeschlossen. Des Weiteren sind innerhalb der Vorrichtung 1 vier Relais vorgesehen. Allerdings unterscheidet sich bei diesem Ausführungsbeispiel die Verschaltung innerhalb der Vorrichtung 1 von dem in Fig. 2 gezeigten Ausführungsbeispiel. Denn bei nur zwei zu steuernden Tischen benötigt die Vorrichtung keine Logik mehr, sodass die Relais der Vorrichtung in diesem Fall durch die Bedienelemente 421, 422 direkt angesteuert werden. In dem vorliegenden Ausführungsbeispiel weist die Vorrichtung 1 demnach keine Logik auf, wobei die beiden oberen Relais direkt durch das Bedienelement 421 angesteuert werden, und die beiden unteren Relais direkt durch das Bedienelement 422 angesteuert werden. Die Begriffe "oben" und "unten" beziehen sich dabei auf die in Fig. 2 gezeigte Darstellung. Wenn in diesem Ausführungsbeispiel eine Benutzereingabe an dem Bedienelement 421 erfolgt, werden die oberen Relais der Vorrichtung 1 auf "Durchleiten" geschaltet, während die unteren Relais in ihrem Ruhezustand einen unendlichen elektrischen Widerstand aufweisen, sodass der von dem Steuergerät 2 abgegebene Fahrstrom an den Tisch 61 weitergeleitet wird. Eine Benutzereingabe an dem Bedienelement 422 verursacht, analog zur gerade beschriebenen Reaktion, dass die unteren Relais auf "Durchleiten" geschaltet werden, während die oberen Relais blockieren, sodass der Tisch 62 durch das Steuergerät 2 mit Fahrstrom versorgt wird.

In einem weiteren Ausführungsbeispiel (nicht dargestellt) ist die Vorrichtung 1 des Weiteren dazu eingerichtet, zusätzliche Informationen von den Motorplatinen der verbauten Motoren M an das Steuergerät 2 weiterzuleiten. In diesem Ausführungsbeispiel weist jede Motorplatine einen Speicherchip zum Speichern der Informationen auf. Die weiterzuleitenden Informationen bestehen dabei unter anderem aus der Kennung des Motortyps oder auch der Ausfahrhöhe der Motorsäulen.

## Patentansprüche

1. Vorrichtung (1), die zum Steuern von zwei oder mehr motorisch höhenverstellbaren Tischen (61, 62, 63) eingerichtet ist, wobei die Vorrichtung (1) aufweist:
zwei oder mehr Schnittstellen (31) zum jeweiligen Versorgen eines Motors (41) oder mehrerer Motoren (41, 41) mit Strom,
zwei oder mehr Schnittstellen (32) zum jeweiligen Kommunizieren mit jeweils einem Bedienelement (42),
**dadurch gekennzeichnet, dass**
die Vorrichtung (1) aufweist:
eine Schnittstelle (50) zum Anschließen eines Steuergeräts (2),
wobei die Vorrichtung (1) dazu eingerichtet ist, einen Eingabebefehl von einem Bedienelement (42) zu erkennen und an das Steuergerät (2) weiterzuleiten,
wobei die Vorrichtung dazu eingerichtet ist, von dem Steuergerät angefragte Motorparameter und/oder Einklemmschutzparameter von dem Motor (41) bzw. von den Motoren (41, 41) an das Steuergerät weiterzuleiten,
wobei die Vorrichtung (1) dazu eingerichtet ist, zu identifizieren, von welchem Bedienelement (42) der Eingabebefehl stammt, diese Information daraufhin an das Steuergerät (2) weiterzuleiten, und den daraufhin von dem Steuergerät (2) abgegebenen Strom an den/die Motor(en) (41) weiterzuleiten, der/die dem Bedienelement (42) zugeordnet ist/sind, von welchem der Eingabebefehl stammt.

2. Vorrichtung (1) gemäß dem vorhergehenden Anspruch,
wobei die Motoren (41) und die Bedienelemente (42) in einzelne Einheiten (11, 12, 13) zusammengefasst sind,
wobei sich jede der Einheiten (11, 12, 13) aus einem Bedienelement (42) und wenigstens einem Motor (41) zusammensetzt,
wobei die Vorrichtung (1) dazu eingerichtet ist, den aus einer Einheit (11, 12, 13) stammenden Eingabebefehl an das Steuergerät (2) weiterzuleiten und den daraufhin von dem Steuergerät (2) abgegebenen Strom an den wenigstens einen Motor (41) der gleichen Einheit (11, 12, 13) weiterzuleiten.

3. Vorrichtung (1) gemäß dem vorhergehenden Anspruch,
wobei jede der Einheiten (11, 12, 13) zum Höhenverstellen jeweils eines Tisches (61, 62, 63) oder zum Verstellen eines verstellbaren Teils eines Tisches (61, 62, 63) vorgesehen ist,
wobei jede der Einheiten (11, 12, 13) wenigstens einen Sensor aufweist,
wobei die Vorrichtung (1) dazu eingerichtet ist, die Sensorsignale und/oder weitere Informationen von den Motoren (41) an das Steuergerät (2) weiterzuleiten.

4. Vorrichtung (1) gemäß einem der vorhergehenden Ansprüche, aufweisend eine Schnittstelle (52) zum Kommunizieren mit dem Steuergerät (2) mittels eines Kommunikations-BUS-Systems.

5. Vorrichtung (1) gemäß einem der vorhergehenden
Ansprüche 2 bis 4,
wobei die Vorrichtung (1) anstatt zum Steuern von zwei oder mehr motorisch höhenverstellbaren Tischen (61, 62, 63) nur zum Steuern von einem höhenverstellbaren Tisch (61) mit zwei oder mehr Einheiten (11, 12, 13) eingerichtet ist.

6. System mit einer Vorrichtung (1) gemäß einem der vorhergehenden Ansprüche, des Weiteren aufweisend:
zwei oder mehr Motoren (41, 41),
zwei oder mehr Bedienelemente (42),
ein Steuergerät (2),
wobei das Steuergerät (2) dazu eingerichtet ist, alle Motoren (41) durch eine externe Stromversorgung (70) mit Strom zu versorgen.

7. System gemäß dem vorhergehenden Anspruch,
wobei das Steuergerät (2) dazu eingerichtet ist, die Motorparameter jedes einzelnen Motors (41) sowie die aktuelle Position jedes einzelnen Motors (41) bzw. höhenverstellbaren Elements bezüglich des Verfahrwegs zu speichern und abzurufen.

8. System gemäß einem der beiden vorhergehenden Ansprüche,
des Weiteren aufweisend zwei oder mehr höhenverstellbare Tische (61, 62, 63).

9. System gemäß einem der vorhergehenden Ansprüche 6 oder 7 mit einer Vorrichtung (1) gemäß Anspruch 5, aufweisend nur einen höhenverstellbaren Tisch (61) mit zwei oder mehr verstellbaren Einheiten (11, 12, 13)

10. System gemäß Anspruch 8, wobei das Steuergerät (2) zum wahlweisen Höhenverstellen von mehreren
Tischen (61, 62, 63) eingerichtet ist.

11. System gemäß Anspruch 9, wobei das Steuergerät (2) zum wahlweisen Höhenverstellen von mehreren Einheiten (11, 12, 13) eines Tisches (61) eingerichtet ist.

12. System gemäß einem der vorhergehenden Ansprüche 6 bis 11,
wobei das Steuergerät (2) und die Vorrichtung (1) jeweils ein Gehäuse aufweisen, wobei die Gehäuse dazu eingerichtet sind, miteinander verbindbar zu sein, vorzugsweise mechanisch.

13. Verfahren zum Höhenverstellen mehrerer Tische (61, 62, 63) und/oder mehrerer Einheiten (11, 12, 13) eines Tisches (61) eines Systems gemäß einem der Ansprüche 8 bis 12, aufweisend die Schritte:
- Feststellen eines Eingabebefehls an einem Bedienelement (42) durch die Vorrichtung (1) gemäß einem der Ansprüche 1 bis 5,
- Identifizieren des Tisches (61, 62, 63) und/oder der Einheit (11, 12, 13), dessen und/oder deren Motor(en) angetrieben werden soll(en), durch die Vorrichtung (1), sowie Weiterleiten dieser Information an das Steuergerät (2) durch die Vorrichtung (1),
- Abrufen von Motorparametern und/oder Einklemmschutzparametern des bzw. der in dem Tisch (61, 62, 63) und/oder der Einheit (11, 12, 13) verbauten Motors (41) bzw. der Motoren (41, 41), welcher bzw. welche verstellt werden soll(en), durch das Steuergerät (2),
- Ermitteln des benötigten Stroms dieses Motors (41) bzw. dieser Motoren (41, 41) durch das Steuergerät (2), und Abgeben des Stroms an die Vorrichtung (1),
- Weiterleiten des Stroms an den Tisch (61, 62, 63) und/oder die Einheit (11, 12, 13), deren Motor(en) angetrieben werden soll(en), zum Verstellen eines Tisches (61, 62, 63) und/oder einer Einheit (11, 12, 13), durch die Vorrichtung (1).

## Claims

1. Device (1) configured to control two or more motorised height-adjustable tables (61, 62, 63), wherein the device (1) has:
two or more interfaces (31), each for supplying one motor (41) or several motors (41, 41) with current,
two or more interfaces (32), each for communicating with a respective operating element (42),
**characterised in that**
the device (1) has:
an interface (50) for connecting a controller (2),
wherein the device (1) is configured to detect an input command from an operating element (42) and to pass it to the controller (2),
wherein the device is configured to pass motor parameters and/or anti-jam parameters from the motor (41) or from the motors (41, 41), which parameters are requested by the controller, to the controller,
wherein the device (1) is configured to identify from which operating element (42) the input command originates, to subsequently pass this information to the controller (2), and to subsequently pass the current output by the controller (2) to the motor(s) (41) associated with the operating element (42) from which the input command originates.

2. Device (1) according to the preceding claim,
wherein the motors (41) and the operating elements (42) are grouped into individual units (11, 12, 13),
wherein each of the units (11, 12, 13) consists of an operating element (42) and at least one motor (41),
wherein the device (1) is configured to pass the input command originating from a unit (11, 12, 13) to the controller (2) and to pass the current subsequently output by the controller (2) to the at least one motor (41) of the same unit (11, 12, 13).

3. Device (1) according to the preceding claim,
wherein each of the units (11, 12, 13) is provided for adjusting the height of a respective table (61, 62, 63) or for adjusting an adjustable part of a table (61, 62, 63),
wherein each of the units (11, 12, 13) has at least one sensor,
wherein the device (1) is configured to pass the sensor signals and/or other information from the motors (41) to the controller (2).

4. Device (1) according to any of the preceding claims, having an interface (52) for communicating with the controller (2) via a communication BUS system.

5. Device (1) according to any of the preceding claims 2 to 4,
wherein the device (1) is configured to control only one height-adjustable table (61) with two or more units (11, 12, 13) instead of controlling two or more motorised height-adjustable tables (61, 62, 63).

6. System with a device (1) according to any of the preceding claims, further having:
two or more motors (41, 41),
two or more operating elements (42),
a controller (2),
wherein the controller (2) is configured to supply all of the motors (41) with current by means of an external current supply (70).

7. System according to the preceding claim,
wherein the controller (2) is configured to store and retrieve the motor parameters of each individual motor (41) as well as the current position of each individual motor (41) and height-adjustable element with respect to the travel path.

8. System according to any of the two preceding claims,
further having two or more height-adjustable tables (61, 62, 63).

9. System according to any of the preceding claims 6 or 7, with a device (1) according to claim 5 which has only one height-adjustable table (61) with two or more adjustable units (11, 12, 13).

10. System according to claim 8, wherein the controller (2) is configured to selectively adjust the height of several tables (61, 62, 63).

11. System according to claim 9, wherein the controller (2) is configured to selectively adjust the height of several units (11, 12, 13) of a table (61).

12. System according to any of the preceding claims 6 to 11,
wherein the controller (2) and the device (1) each have a housing, wherein the housings are configured to be connectable with each other, preferably mechanically.

13. Method for adjusting the height of several tables (61, 62, 63) and/or several units (11, 12, 13) of a table (61) of a system according to any of claims 8 to 12, having the steps of:
- detecting an input command at an operating element (42) by means of the device (1) according to any of claims 1 to 5,
- identifying the table (61, 62, 63) and/or the unit (11, 12, 13), the motor(s) of which is/are to be driven, by means of the device (1), as well as passing this information to the controller (2) by means of the device (1),
- retrieving motor parameters and/or anti-jam parameters of the motor (41) or motors (41, 41) installed in the table (61, 62, 63) and/or the unit (11, 12, 13) which is/are to be adjusted, by means of the controller (2),
- determining the current required by this motor (41) or these motors (41, 41), by means of the controller (2), and supplying the current to the device (1),
- passing the current to the table (61, 62, 63) and/or the unit (11, 12, 13), the motor(s) of which is/are to be driven, in order to adjust a table (61, 62, 63) and/or a unit (11, 12, 13), by means of the device (1).

## Revendications

1. Dispositif (1) qui est aménagé pour la commande de deux tables (61, 62, 63) réglables en hauteur de manière motorisée ou plus, dans lequel le dispositif (1) présente :
deux interfaces (31) ou plus pour l'alimentation respective en courant d'un moteur (41) ou de plusieurs moteurs (41, 41),
deux interfaces (32) ou plus pour la communication respective avec respectivement un élément de commande (42),
**caractérisé en ce que**
le dispositif (1) présente :
une interface (50) pour la raccordement d'un appareil de commande (2),
dans lequel le dispositif (1) est aménagé afin de reconnaître un ordre de saisie d'un élément de commande (42) et de le transmettre à l'appareil de commande (2),
dans lequel le dispositif est aménagé afin de transmettre à l'appareil de commande des paramètres de moteur et/ou des paramètres de protection de serrage du moteur (41) ou des moteurs (41, 41) demandés par l'appareil de commande,
dans lequel le dispositif (1) est aménagé afin d'identifier de quel élément de commande (42) l'ordre de saisie provient, de transmettre cette information ensuite à l'appareil de commande (2), et de transmettre le courant émis sur ce par l'appareil de commande (2) au(x) moteur(s) (41) qui est/sont associé(s) à l'élément de commande (42), duquel l'ordre de saisie provient.

2. Dispositif (1) selon la revendication précédente,
dans lequel les moteurs (41) et les éléments de commande (42) sont réunis dans des unités (11, 12, 13) individuelles,
dans lequel chacune des unités (11, 12, 13) se compose d'un élément de commande (42) et d'au moins un moteur (41),
dans lequel le dispositif (1) est aménagé afin de transmettre l'ordre de saisie provenant d'une unité (11, 12, 13) à l'appareil de commande (2) et de transmettre le courant émis sur ce par l'appareil de commande (2) à l'au moins un moteur (41) de l'unité (11, 12, 13) identique.

3. Dispositif (1) selon la revendication précédente,
dans lequel chacune des unités (11, 12, 13) est prévue pour le réglage en hauteur respectivement d'une table (61, 62, 63) ou pour le réglage d'une partie réglable d'une table (61, 62, 63),
dans lequel chacune des unités (11, 12, 13) présente au moins un capteur,
dans lequel le dispositif (1) est aménagé afin de transmettre les signaux de capteur et/ou d'autres informations des moteurs (41) à l'appareil de commande (2),

4. Dispositif (1) selon l'une quelconque des revendications précédentes, présentant une interface (52) pour la communication avec l'appareil de commande (2) au moyen d'un système de communication BUS.

5. Dispositif (1) selon l'une quelconque des revendications précédentes 2 à 4,
dans lequel le dispositif (1) est aménagé seulement pour la commande d'une table réglable en hauteur (61) avec deux unités (11, 12, 13) ou plus plutôt que pour la commande de deux tables (61, 62, 63) réglables en hauteur de manière motorisée ou plus.

6. Système avec un dispositif (1) selon l'une quelconque des revendications précédentes, présentant en outre :
deux moteurs (41, 41) ou plus,
deux éléments de commande (42) ou plus,
un appareil de commande (2),
dans lequel l'appareil de commande (2) est aménagé afin d'alimenter en courant tous les moteurs (41) par une alimentation en courant externe (70).

7. Système selon la revendication précédente,
dans lequel l'appareil de commande (2) est aménagé afin d'enregistrer et d'appeler les paramètres de moteur de chaque moteur (41) individuel ainsi que la position actuelle de chaque moteur (41) individuel ou de l'élément réglable en hauteur par rapport à la course de déplacement.

8. Système selon l'une quelconque des deux revendications précédentes, présentant en outre deux tables (61, 62, 63) réglables en hauteur ou plus.

9. Système selon l'une quelconque des revendications précédentes 6 ou 7 avec un dispositif (1) selon la revendication 5, présentant seulement une table (61) réglable en hauteur avec deux unités (11, 12, 13) réglables ou plus.

10. Système selon la revendication 8, dans lequel l'appareil de commande (2) est aménagé pour le réglage en hauteur au choix de plusieurs tables (61, 62, 63).

11. Système selon la revendication 9, dans lequel l'appareil de commande (2) est aménagé pour le réglage en hauteur au choix de plusieurs unités (11, 12, 13) d'une table (61).

12. Système selon l'une quelconque des revendications précédentes 6 à 11,
dans lequel l'appareil de commande (2) et le dispositif (1) présentent respectivement un boîtier, dans lequel les boîtiers sont aménagés afin de pouvoir être reliés entre eux, de préférence par voie mécanique.

13. Procédé de réglage en hauteur de plusieurs tables (61, 62, 63) et/ou de plusieurs unités (11, 12, 13) d'une table (61) d'un système selon l'une quelconque des revendications 8 à 12, présentant les étapes suivantes :
- la fixation d'un ordre de saisie à un élément de commande (42) par le dispositif (1) selon l'une quelconque des revendications 1 à 5,
- l'identification de la table (61, 62, 63) et/ou de l'unité (11, 12, 13), dont le(s) moteur(s) doit/doivent être entraîné(s), par le dispositif (1), ainsi que la transmission de cette information à l'appareil de commande (2) par le dispositif (1),
- l'appel de paramètres de moteur et/ou de paramètres de protection de serrage du moteur (41) ou des moteurs (41, 41) installé(s) dans la table (61, 62, 63) et/ou dans l'unité (11, 12, 13) qui doit/doivent être réglé(s), par l'appareil de commande (2),
- la détermination du courant nécessaire de ce moteur (41) ou de ces moteurs (41, 41) par l'appareil de commande (2), et l'émission du courant au dispositif (1),
- la transmission du courant à la table (61, 62, 63) et/ou l'unité (11, 12, 13), dont le(s) moteur(s) doit/doivent être entraîné(s), pour le réglage d'une table (61, 62, 63) et/ou d'une unité (11, 12, 13), par le dispositif (1).
